# EUROPEAN PATENT APPLICATION

(11) **EP 2 169 509 A2**
(43) Date of publication of application: **31.03.2010**
(21) Application number: 09011177.4
(22) Date of filing: 31.08.2009
(51) Int. Cl.: G05D 11/13

(54) **Soil improvement agent supply apparatus**

(30) Priority: 25.09.2008 JP 2008246694
(71) Applicant: Hitachi Construction Machinery Co., Ltd, Tokyo 112-0004 (JP)
(72) Inventor: Shimizu, Tsuyoshi, Tsuchiura-shi Ibaraki 300-0013 (JP); Takeuchi, Hiroki, Tsuchiura-shi Ibaraki 300-0013 (JP)
(74) Representative: Beetz & Partner

(57) **Abstract**

Disclosed is a soil improvement agent supply apparatus that offers enhanced supply accuracy by minimizing the influence of changes in the bulk density of a soil improvement agent. The soil improvement agent supply apparatus, which adds the soil improvement agent to soil, includes a storage tank (15) for storing the soil improvement agent, a feeder (16) for adding the soil improvement agent in the storage tank (15) to the soil, an arch breaker (51) for stirring the soil improvement agent in the storage tank (15), a load detector (88) for detecting the drive load on the feeder (16), a memory unit (92) for storing the relationship between the drive load on the feeder (16) and the drive speed of the arch breaker (51), and a computing unit for controlling the drive speed of the arch breaker (51) in accordance with a signal from the load detector (88) and information stored in the memory unit (92). The soil improvement agent supply apparatus increases a speed command value for the arch breaker (51) when the drive load on the feeder (16) decreases, and decreases the speed command value for the arch breaker (51) when the drive load on the feeder (16) increases.

## Description

### BACKGROUND OF THE INVENTION

### 1. Field of the Invention

The present invention relates to a soil improvement agent supply apparatus for adding a soil improvement agent to soil.

### 2. Description of the Related Art

A common powder supply apparatus disclosed, for instance, in JP-61-51945U uses a feeder in a lower section to discharge powder stored in a storage tank to the outside of the storage tank. Not only a screw feeder but also a rotary feeder (rotary valve), a belt conveyor, a table feeder, and various other machines are used as the feeder.

### SUMMARY OF THE INVENTION

A soil improvement machine generally uses a soil improvement agent supply apparatus which is generally a powder supply apparatus, in order to add powdered lime or other soil improvement agent to the soil to be improved, and mixes the soil improvement agent with the soil to generate improved soil. Typically, a silo or flexible container is used to fill a storage tank with the soil improvement agent. In either case, the soil improvement agent is poured into the storage tank from its top. Thus, the soil improvement agent mixes with air when it falls. Consequently, the bulk density of the soil improvement agent in the storage tank varies with the degree of mixture of the soil improvement agent and air. More specifically, the bulk density decreases with an increase in the amount of air in the mixture.

In a soil improvement operation, it is important that a stable mixing ratio be maintained between the soil improvement agent and the target soil to make the improved soil quality consistent by adding a predetermined weight of soil improvement agent to the target soil. Either a method of controlling the amount of soil improvement agent to be introduced into the feeder or a method of controlling the feeder drive speed may be used to control the amount of soil improvement agent supply. However, the latter method is commonly used because it is superior in terms of accuracy. Further, when the soil improvement agent supply apparatus directly adds the soil improvement agent to the target soil, it is not easy to measure the weight of the added soil improvement agent. Under such circumstances, the weight of the added soil improvement agent is generally managed by estimating the cubic volume of the soil improvement agent from the feeder drive speed and multiplying the estimated cubic volume by the bulk density of the soil improvement agent.

Consequently, when the bulk density changes due to the mixture of air and soil improvement agent, the weight of the added soil improvement agent relative to the feeder drive speed changes in effect. However, the above-described method of calculating the weight of the added soil improvement agent generally assumes that the bulk density is a constant value. Therefore, a change in the bulk density would not affect the calculation results. The error between the calculated and actual amounts of soil improvement agent supply may increase depending on the bulk density, thereby causing an adverse effect on the accuracy of soil improvement agent supply and the consistency of improved soil quality.

An object of the present invention is to provide a soil improvement agent supply apparatus that offers enhanced supply accuracy by minimizing the influence of changes in the bulk density of a soil improvement agent.
(1) In accomplishing the above object, according to one aspect of the present invention, there is provided a soil improvement agent supply apparatus for adding a soil improvement agent to soil. The soil improvement agent supply apparatus includes: a storage tank for storing the soil improvement agent; a feeder placed beneath the storage tank to add the soil improvement agent stored in the storage tank to the soil; a stirring device placed in the storage tank to stir the soil improvement agent in the storage tank; a load detector for detecting the drive load on the feeder; and a control device for controlling the feeder and the stirring device. The control device includes: an input section for receiving a signal from the load detector; a memory unit for storing the relationship between the drive load on the feeder and the drive speed of the stirring device; a command section which, in accordance with a signal from the load detector and information stored in the memory unit, increases a speed command value for the stirring device as the drive load on the feeder decreases and decreases the speed command value for the stirring device as the drive load on the feeder increases; and an output section for outputting a command value generated in the command section to the stirring device.
(2) In accomplishing the above object, according to another aspect of the present invention, there is provided a soil improvement agent supply apparatus for adding a soil improvement agent to soil. The soil improvement agent supply apparatus includes: a storage tank for storing the soil improvement agent; a feeder placed beneath the storage tank to add the soil improvement agent stored in the storage tank to the soil; a stirring device placed in the storage tank to stir the soil improvement agent in the storage tank; a control device for controlling the feeder and the stirring device; and an operating unit for manipulating the drive speed of the feeder. The control device includes: a memory unit for storing the relationship between drive speed command values for the feeder and the stirring device; a command section which, in accordance with a signal from the operating unit and information stored in the memory unit, increases the speed command value for the stirring device as the speed command value for the feeder increases and decreases the speed command value for the stirring device as the speed command value for the feeder decreases; and an output section for outputting the command values generated in the command section to the feeder and the stirring device.
(3) According to another aspect of the present invention, there is provided the soil improvement agent supply apparatus as described in (2) above, further including a load detector for detecting the drive load on the feeder, wherein the memory unit stores the relationship between the drive speed of the feeder and the drive speed of the stirring device with respect to each of a plurality of drive load ranges of the feeder, and wherein the command section references the relationship in accordance with a signal from the load detector and generates a speed command value for the stirring device.
(4) According to another aspect of the present invention, there is provided the soil improvement agent supply apparatus as described in (1) or (3) above, wherein the memory unit stores a preselected threshold value for the drive load on the feeder, and wherein the command section reduces the speed command value for the stirring device to zero when the drive load on the feeder, the drive load being computed in accordance with a signal from the load detector, reaches the threshold value.
(5) In accomplishing the above object, according to another aspect of the present invention, there is provided a soil improvement agent supply apparatus for adding a soil improvement agent to soil. The soil improvement agent supply apparatus includes: a storage tank for storing the soil improvement agent; a feeder placed beneath the storage tank to add the soil improvement agent stored in the storage tank to the soil; a stirring device placed in the storage tank to stir the soil improvement agent in the storage tank; a speed detector for detecting the drive speed of the feeder; and a control device for controlling the feeder and the stirring device. The control device includes: an input section for receiving a signal from the speed detector; a memory unit for storing the relationship between the drive speed of the feeder and the drive speed of the stirring device; a command section which, in accordance with a signal from the speed detector and information stored in the memory unit, increases a speed command value for the stirring device as the drive speed of the feeder increases and decreases the speed command value for the stirring device as the drive speed of the feeder decreases; and an output section for outputting a command value generated in the command section to the stirring device.
(6) In accomplishing the above object, according to another aspect of the present invention, there is provided a soil improvement agent supply apparatus for adding a soil improvement agent to soil. The soil improvement agent supply apparatus includes: a storage tank for storing the soil improvement agent, a feeder placed beneath the storage tank to add the soil improvement agent stored in the storage tank to the soil; a stirring device placed in the storage tank to stir the soil improvement agent in the storage tank; a load detector for detecting the drive load on the feeder; and a control device for controlling the feeder and the stirring device. The control device includes: an input section for receiving a signal from the load detector; a memory unit for storing a preselected threshold value for the drive load on the feeder; a command section which generates a predefined speed command value for the stirring device when the feeder drive load computed in accordance with a signal from the load detector is lower than the threshold value and reduces the speed command value for the stirring device to zero when the feeder drive load is not lower than the threshold value; and an output section for outputting a command value generated in the command section to the stirring device.
(7) According to still another aspect of the present invention, there is provided the soil improvement agent supply apparatus as described in any one of (1) to (6) above, wherein the feeder is a screw feeder including a tubular casing connected to the bottom of the storage tank; a rotating shaft placed in the casing; and a screw which is mounted on the outer circumference of the rotating shaft.

The present invention makes it possible to enhance the accuracy of soil improvement agent supply by minimizing the influence of changes in the bulk density of the soil improvement agent because the bulk density of the soil improvement agent in the storage tank is stabilized when a stirring device stirs the soil improvement agent at an appropriate drive speed.

### BRIEF DESCRIPTION OF THE DRAWINGS

FIG. 1 is a side view illustrating the overall structure of a self-propelled soil improvement machine that is equipped with a soil improvement agent supply apparatus according to a first embodiment of the present invention.
FIG. 2 is a plan view illustrating the overall structure of the self-propelled soil improvement machine that is equipped with the soil improvement agent supply apparatus according to the first embodiment of the present invention.
FIG. 3 is a sectional side view illustrating the soil improvement agent supply apparatus according to the first embodiment of the present invention.
FIG. 4 is a diagram illustrating a hydraulic drive circuit for a feeder and an arch breaker that are included in the soil improvement agent supply apparatus according to the first embodiment of the present invention.
FIG. 5 is a functional block diagram illustrating essential parts of a control device that is included in the first embodiment of the present invention.
FIG. 6 shows an example of a control line stored in a memory unit that is included in the first embodiment of the present invention.
FIG. 7 shows an example of a control line stored in the memory unit that is included in the first embodiment of the present invention.
FIG. 8 shows an example of a control line stored in the memory unit that is included in the first embodiment of the present invention.
FIG. 9 shows an example of a control line stored in the memory unit that is included in the first embodiment of the present invention.
FIG. 10 is a functional block diagram illustrating essential parts of a control device that is included in a second embodiment of the present invention.
FIG. 11 shows examples of control lines stored in a memory unit that is included in the second embodiment of the present invention.
FIG. 12 is a functional block diagram illustrating essential parts of a control device that is included in a third embodiment of the present invention.
FIG. 13 shows an example of a control line stored in a memory unit that is included in the third embodiment of the present invention.

### DESCRIPTION OF THE PREFERRED EMBODIMENTS

Embodiments of the present invention will now be described with reference to the accompanying drawings.

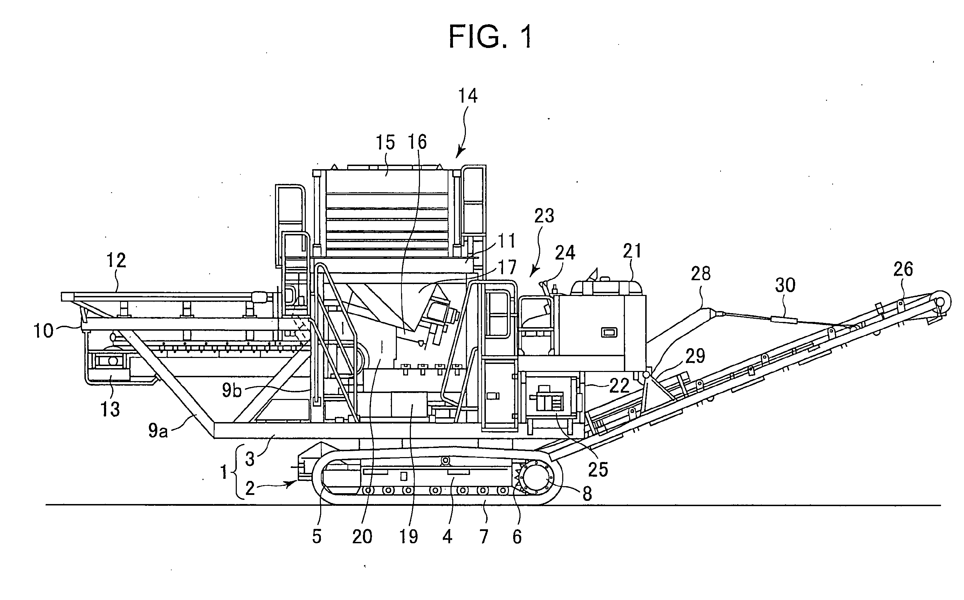

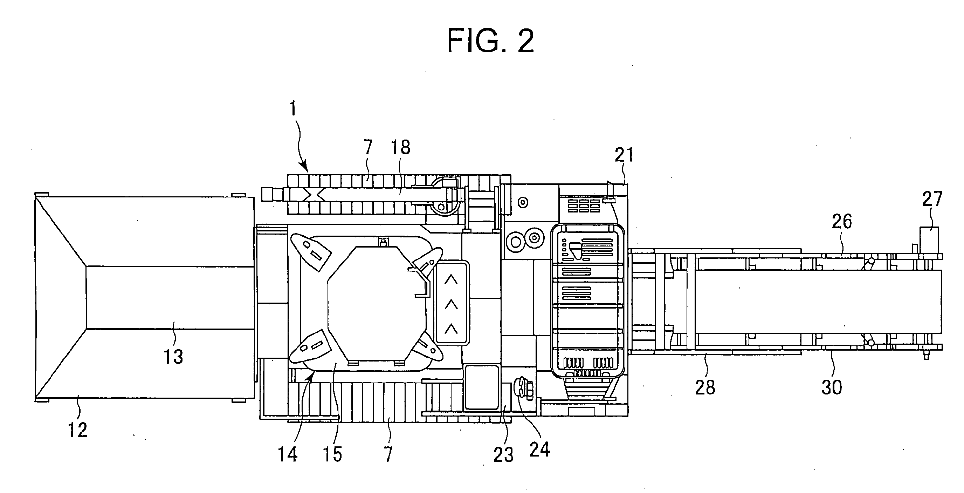

FIG. 1 is a side view illustrating the overall structure of a self-propelled soil improvement machine that is equipped with a soil improvement agent supply apparatus according to a first embodiment of the present invention, and FIG. 2 is a plan view thereof. Unless otherwise stated, the left and right sides in FIGS. 1 and 2 are hereinafter referred to as the first side and the second side, respectively.

The self-propelled soil improvement machine shown in FIGS. 1 and 2 includes: a travel structure 1 for self-traveling; a hopper 12 for receiving soil to be improved; a transport conveyor 13 for transporting the soil received by the hopper 12; a soil improvement agent supply apparatus 14 for adding a soil improvement agent to the soil; a mixing device 19 for mixing the soil with the soil improvement agent; a discharge conveyor 26 for transporting improved soil which is ejected from the mixing device 19, and discharging it out of the machine; and a power unit 21 which incorporates, for instance, a power source for each mounted device.

The travel structure 1 includes a pair of left and right travel devices 2, and a pair of main body frames 3 which are positioned above and extended substantially in parallel with. Each travel device 2 includes a track frame 4 which is joined to the underside of the main body frames 3; a driven wheel (idler) 5 and a driving wheel 6 which are respectively attached to either end of the track frame 4; crawler belts (caterpillar track crawler belts) 7 which are wound around the driven wheel 5 and driving wheel 6; and a drive unit 8 which is directly coupled to the driving wheel 6 for traveling purposes. Support posts 9a, 9b are mounted on the main body frames 3 in a standing manner. The support posts 9a, 9b support a support frame 10 positioned above the longitudinal first side of the main body frames 3, and a support frame 11 positioned substantially above the longitudinal center of the main body frames 3.

The hopper 12, a frame-shaped member whose top and bottom are open, is shaped so that its opening is enlarged upward. The hopper 12 is supported by the longitudinal first side of the main body frames 3 through the support frame 10. The transport conveyor 13 is extended substantially horizontally from the underside of the hopper 12 to the upside of an inlet (not shown) of the later-described mixing device 19 and supported, for instance, by the support post 9a.

The soil improvement agent supply apparatus 14 includes a storage tank 15 for storing a soil improvement agent and a screw feeder 16 for adding the soil improvement agent in the storage tank 15 to soil, and is positioned substantially above the center of the main body frames 3 via the support frame 11. A crane 18 (see FIG. 2) is mounted on one widthwise end of the machine (shown in the upper part of FIG. 2) and positioned lateral to the soil improvement agent supply apparatus 14. The crane 18 is used to hang, for instance, a flexible container (Tonpack) which is filled with the soil improvement agent, above the storage tank 15 and facilitate an operation to fill the storage tank 15 with the soil improvement agent supplied from the flexible container.

The mixing device 19 which receives soil from the transport conveyor 13 and mixes the soil with the soil improvement agent with a paddle mixer (not shown) to generate improved soil, is positioned substantially above the longitudinal center of the main body frames 3 so that it is placed beneath the screw feeder 16. A space between a release end of the transport conveyor 13 (the rightmost end in FIG. 1) and a soil/soil improvement agent inlet (not shown) of the mixing device 19 is surrounded by a cover 20. A soil improvement agent outlet 64 of the screw feeder 16 also faces the space surrounded by the cover 20. Therefore, the cover 20 inhibits the soil and soil improvement agent from scattering when they are introduced into the inlet of the mixing device 18.

The power unit 21 is supported by the end of the longitudinal second side of the main body frames 3 via a support member 22. A cab seat 23 is provided in an area before the power unit 21 (that is positioned to the left of the power unit 21 as viewed in FIGS. 1 and 2). The cab seat 23 is provided, for instance, with a control lever 24 for controlling the travel devices 2. Further, a control panel 25 is mounted on a lateral surface of the machine and positioned below the cab seat 23 to control the operations of the mixing device 19 and other devices except the travel devices 2.

The discharge conveyor 26 is extended substantially horizontally over a predetermined distance from the underside of the mixing device 19 toward the longitudinal second side of the main body frames 3, and then extended obliquely upward from a section below the power unit 21. A drive unit 27 (see FIG. 2) which is coupled to a drive pulley (not shown) drives a transport belt cyclically to discharge improved soil on the transport belt. The upstream portion of the discharge conveyor 26 (the left portion in FIG. 1) is hung from the main body frames 3 via a support member (not shown), whereas the intermediate and downstream portions of the discharge conveyor 26 (the right portions in FIG. 1) are hung from an arm 28 which is attached to the rear end of the power unit 21 (the right side in FIG. 1), via support members 29, 30.

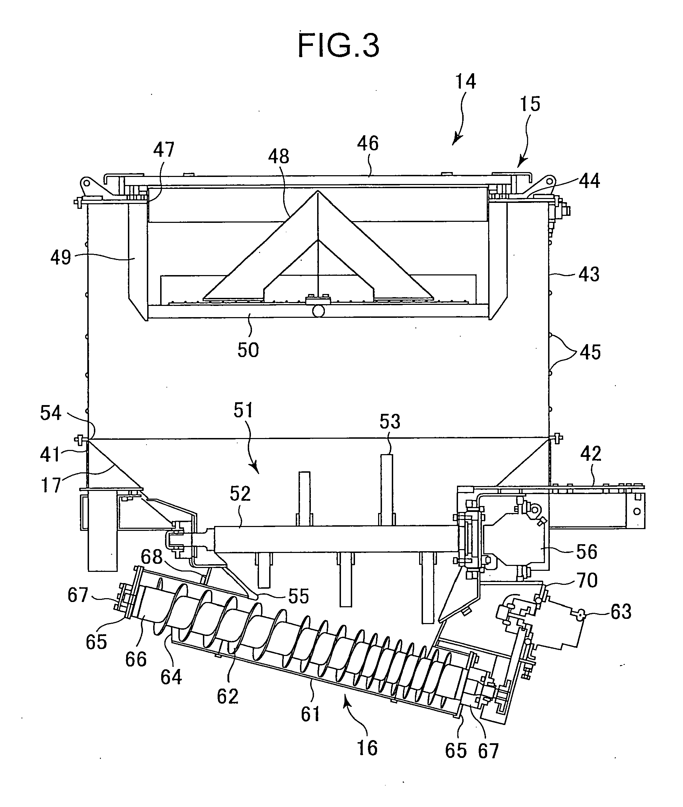

FIG. 3 is a sectional side view illustrating the soil improvement agent supply apparatus 14. This figure shows a vertical cross section taken along the length of the main body frames 3.

Referring to FIG. 3, the storage tank 15 includes a frame 41 which is fastened to the support frame 11; a bottom plate 42 which is fastened to the frame 41 and provided with a central opening; a bellows section 43 which connects to the bottom plate 42 and has a rectangular (or circular) horizontal cross section; a top plate 44 which covers the upper opening in the bellows section 43, and a chute 17 which connects to the bottom of the bellows section 43 and has a downward decreasing diameter. The bellows section 43 is made of a stretchable and flexible material such as a polyethylene rubber material. As the inner pressure exerted by the internally stored soil improvement agent is higher at a lower portion of the bellows section 43 compared with an upper portion thereof, the pitch of a reinforcement ring 45 is set to decrease with a decrease in height as shown in FIG. 3. The center of the top plate 44 is provided with a soil improvement agent inlet 47. An open/close cover 46 which opens or closes the inlet 47 is mounted on the upper surface of the top plate 44 via a hinge (not shown).

A cutter 48 is mounted below the inlet 47 in the top plate 44. The cutter 48 is attached to a frame structure 50 vertically mounted on the bottom surface of the open/close cover 46 via a support arm 49, in such a manner that the tower head of the cutter 48 faces upward. The frame structure 50 is positioned lower than the top plate 44 by a predetermined distance so that the apex of the cutter 48 is positioned lower than the open/close cover 46. When the open/close cover 46 is closed, the cutter 48 is entirely housed within the storage tank 15. When the flexible container (Tonpack) is used to fill the storage tank 15 with the soil improvement agent, the flexible container is inserted into the inlet 47 with the crane 18, with the open/close cover 46 on the top plate 44 opened, and pressed against the cutter 48 by its own weight. The lower end of the flexible container is then slit so that the soil improvement agent in the flexible container flows into the storage tank 15. Alternatively, the soil improvement agent may be stored in a silo, which is provided separately from the self-propelled soil improvement machine, transferred from the silo through a hose, and filled into the storage tank 15, without using a flexible container. Even when such an alternative scheme is used, the soil improvement agent is filled into the storage tank 15 from the top plate 44 side.

The chute 17 is a member that is shaped like a rectangular cone (or a circular cone) and has a downward decreasing diameter, and its upper and lower ends are open. The upper opening 54 of the chute 17 is linked to the lower end of the bellows section 43 so that the internal space of the bellows section 43 is in communication with the internal space of the chute 17. The lower opening 55 of the chute 17 is linked to the screw feeder 16 so that the internal space of the chute 17 is in communication with the internal space of the screw feeder 16. Consequently, the soil improvement agent filled into the storage tank 15 flows into the chute 17 through the upper opening 54, and is guided by the chute 17 until it is introduced from the lower opening 55 to the screw feeder 16. The lower opening 55 of the chute 17 is shaped so that the length along the axial direction of the screw feeder 16 (the left-right direction in FIG. 2) is greater than the width along a direction orthogonal to the axis line of the screw feeder 16 (a direction orthogonal to the paper surface of FIG. 3). Further, the corners of an inner wall surface (the boundaries between sidewalls) which are extended from the upper opening 54 of the rectangular-cone-shaped chute 17 toward the lower opening 55, are rounded by attaching a round member to them or forming a weld bead on them so that the soil improvement agent does not readily stay at the inner surface corners of the chute 17. The inner wall surface of the chute 17 may be rubber-lined together with the inner circumferential surface of a casing 61 for the screw feeder 16.

An arch breaker (stirring device) 51 is placed within the chute 17 to stir the soil improvement agent in the storage tank 15. The arch breaker 51 includes a rotating shaft 52 supported rotatably with respect to the chute 17; a plurality of stirring bars 53 which are mounted on the rotating shaft 52 and spaced at predetermined intervals; and a drive unit 56 which is directly coupled to an end of the rotating shaft 52 (the rightmost end in FIG. 3).

In the present embodiment, the rotating shaft 52 is positioned horizontally along the longitudinal direction of the main body frames 3. In accordance with the inclination of the screw feeder 16 below the rotating shaft 52, the length of a stirring bar 53 is shortened with closing to the leftmost end of the rotating shaft 52 in FIG. 3. Therefore, the rotational trajectory of the end of each stirring bar 53 is positioned close to a screw 62 to which the stirring bars 53 face through the lower opening 55. The stirring bars 53 are mounted on the outer circumference of the rotating shaft 52 and disposed at 180-degree intervals as viewed in the axial direction of the rotating shaft 52. When the state of the stirring bars 53 shown in FIG. 3 changes by rotating the rotating shaft 90 degrees, all the stirring bars 53 are oriented in a horizontal direction. Although details are not shown in the figure, the arch breaker 51 is equipped with a sensor that detects an angular position of the rotating shaft 52 in which the stirring bars 53 are placed in a horizontal position. When the drive turns off, control is exercised so that the stirring bars 53 stop in a horizontal position. The drive unit 56 is a hydraulic motor (or an electric motor) that is mounted on the outer wall of the chute 17.

When the drive unit 56 rotationally drives the arch breaker 51, the stirring bars 53 stirs the soil improvement agent in the chute 17 to inhibit bridge formation within the chute 17. Further, the stirring bars 53 will help to crush any lumps of soil improvement agent. The stirring bars 53 can also perform a function of supplying the soil improvement agent near the lower opening 55 to the screw feeder 16.

The outer circumference of the top plate 44 is provided with a plurality of mounts (four mounts in the present embodiment) which are not shown in FIG. 3. A stanchion is vertically fastened to the base of each mount as shown in FIG. 1. Each stanchion is vertically slidably inserted into a guide cylinder which is attached to the bottom plate 42 of the chute 17. Upper and lower pinholes are made in each stanchion. Therefore, when a stopper pin is inserted into a pinhole in the guide cylinder in alignment with either the upper pinhole or lower pinhole in a stanchion, the stanchion is fastened to the guide cylinder. When the stanchion is pulled upward to let the stopper pin fasten the lower pinhole to the guide cylinder during, for instance, a period in which an operation is to be conducted, the inner cubic volume of the storage tank is secured. Meanwhile, when the bellows section 43 is contracted to let the stopper pin fasten the upper pinhole to the guide cylinder during, for instance, a period in which the self-propelled soil improvement machine is to be transported with a trailer or the like, the height of the storage tank 15 is reduced. The arch breaker 51 is set so that the stirring bars 53 are oriented in a horizontal direction when it is stopped. Therefore, when the bellows section 43 is contracted, the frame structure 50 supporting the cutter 48 can be lowered close to the rotating shaft 52 of the arch breaker 51. This contributes toward increased compactness of the storage tank 15 when it is placed in a storage position.

The screw feeder 16 includes a cylindrical casing 61 which is linked to the bottom of the chute 17; a rotating shaft 66 which is inserted into the casing 61 and rotatably supported; a screw 62 which is mounted on the outer circumference of the rotating shaft 66; and a drive unit 63 (see FIG. 3) which is a hydraulic motor (or an electric motor) for rotationally driving the screw 62.

The upper half of a circumferential barrel of the casing 61 is provided with a soil improvement agent inlet which is linked to the lower opening 55 of the chute 17 as shown in FIG. 3. The soil improvement agent inlet is formed substantially the same in shape and quality as the lower opening 55. The periphery of the soil improvement agent inlet is welded or otherwise affixed to the periphery of the lower opening 55. In this manner, the casing 61 is fastened to the bottom of the chute 17. Further, the casing 61 is supported with increased stability as its soil improvement agent transfer downstream end (the left side of FIG. 3) is fastened to the outer wall surface of the chute 17 via a support member 68 (see FIG. 3). Furthermore, the casing 61 has the soil improvement agent outlet 64 formed downside end thereof in the transfer downstream direction of the soil improvement agent, to discharge the soil improvement agent.

The casing 61 is configured as shown in FIG. 1. More specifically, the casing 61 is positioned at substantially the same height as the transport conveyor 13 at the upstream side thereof in the transfer direction of the soil improvement agent (the right side of FIG. 1). The casing 61 is then sloped upward toward the downstream side thereof in the transfer direction of the soil improvement agent (the left side of FIG. 1), and the downstream end thereof is positioned above the downstream end of the transport conveyor 13 in the transfer direction (the rightmost end of FIG. 1). The casing 61 is sloped as described above to lower its upstream side by utilizung a space above the mixing device 19. This ensures that the gravity center of the casing 61 is lowered to reduce the overall height of the soil improvement agent supply apparatus 14. Further, as the casing 61 is sloped upward toward the downstream side thereof in the transfer direction of the soil improvement agent, resistance is offered to a soil improvement agent flow that could occur irrespectively of the rotation of the screw 62.

As shown in FIG. 3, each axial ends of the casing 61 is covered by an end plate 65 through which the rotating shaft 66 of the screw 62 is passed. The rotating shaft 66 which is passed through the end plate 65 is rotatably supported by a bearing 67 which is mounted on the outer surface of the end plate 65. The rotating shaft 66 of the screw 62 may be made of a hollow pipe for weight reduction purposes. However, it may alternatively be made of a solid round bar or square bar.

The screw 62 is a spiral blade that is helically wound around the outer circumference of the rotating shaft 66 as shown in FIG. 3. Within a range facing the lower opening 55 of the chute 17, the screw 62 has a predetermined pitch on the downstream side thereof in the transfer direction of the soil improvement agent and a shorter pitch on the upstream side thereof in order that the soil improvement agent is introduced into the casing 61 from the entire lower opening 55 of the chute 17. The pitch of the screw 62 may be continuously increased toward the downstream end. In the present embodiment, however, it is increased in a stepwise fashion toward the downstream end.

The drive unit 63 for the screw feeder 16 is mounted on the longitudinal second side of the main body frames 3 for the chute 17 via a drive transmission section 70 (see FIG. 3) which houses a drive transmission mechanism (not shown). The drive transmission section 70 houses an output shaft of the drive unit 63, a sprocket (or a pulley) mounted on the output shaft, a sprocket (or a pulley) mounted on the right end of the rotating shaft 66 for the screw 62 (the rightmost end of FIG. 3), and a chain (or a belt) wound around these sprockets (or pulleys), although they are not depicted. In other words, the screw feeder 16 rotates the screw 62 by causing the drive transmission section 70 to transmit the driving force of the drive unit 63 to the rotating shaft 66 via the chain (or the belt). It is preferred that the employed drive unit 63 be capable of varying and controlling its rotation speed. When, for instance, a hydraulic motor is used as the drive unit 63, the employed configuration should be such that a rotation speed detector detects the rotation speed of the drive unit 63 and allows a control valve device to adjust the rate of hydraulic fluid supply to the drive unit 63 in accordance with the difference between the detected rotation speed and a target rotation speed. When the employed configuration is as described above, the rotation speed of the drive unit 63, that is, the amount of soil improvement agent supply per hour, can be closed to a target value.

As far as the above configuration is employed, the screw feeder 16 performs a function of transferring the soil improvement agent which is introduced from the storage tank 15 through the chute 17, toward the left side of FIG. 1 (in a direction opposite the transport direction of the transport conveyor 13), and adding the soil improvement agent to the soil that is transported near the downstream end of the transport conveyor 13 in the soil transport direction (the rightmost end of FIG. 1).

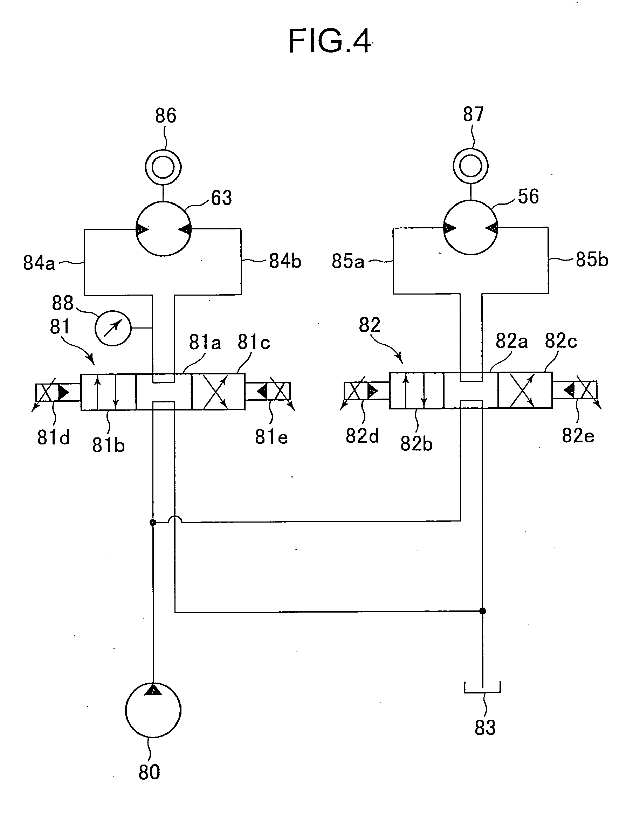

FIG. 4 is a diagram illustrating a hydraulic drive circuit for the feeder 16 and arch breaker 51. Elements that are shown in FIG. 4 and identical with those in the preceding figures are designated by the same reference numerals as the corresponding elements and will not be redundantly described.

As shown in FIG. 4, the hydraulic drive circuit includes a hydraulic pump 80 which is driven by an engine (not shown); a control valve 81 which controls the flow of hydraulic fluid from the hydraulic pump 80 to the feeder drive unit 63; a control valve 82 which controls the flow of hydraulic fluid from the hydraulic pump 80 to the arch breaker drive unit 56. The control valves 81, 82 are pilot-operated and proportional solenoid type of three-position selector valves. When placed in neutral positions 81a, 82a, the control valves 81, 82 stop the flow of hydraulic fluid from the hydraulic pump 80 to the drive units 63, 56, and return the hydraulic fluid discharged from the hydraulic pump 80 to a tank 83. When command signals are input to solenoid drive sections 81d, 82d (or solenoid drive sections 81e, 82e) to switch to selection positions 81b, 82b (or selection positions 81c, 82c), the hydraulic fluid discharged from the hydraulic pump 80 is introduced into supply lines 84a, 85a (or supply lines 84b, 85b) to drive the drive units 63, 56 in a normal direction (or in a reverse direction).

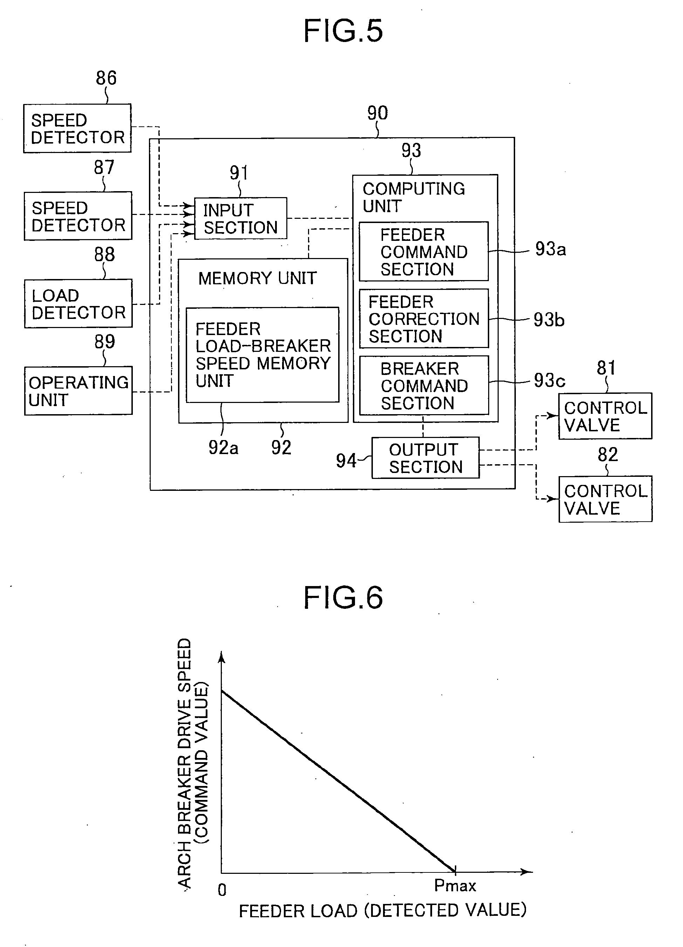

The drive units 63, 56 are provided with rotation speed detectors 86, 87 which detect the rotation speeds of the drive units 63, 56 as the drive speeds of the feeder 16 and arch breaker 51. The normal drive supply line 84a for the feeder drive unit 63 is provided with a load detector 88 which detects the pressure of hydraulic fluid in the supply line 84a as the load on the feeder 16. Detection signals of these detectors 86-88 are output to a control device 90 (see FIG. 5), which controls the operations of the feeder 16, arch breaker 51, and other devices.

FIG. 5 is a functional block diagram illustrating essential parts of the control device 90. Elements that are shown in FIG. 5 and identical with those in the preceding figures are designated by the same reference numerals as the corresponding elements and will not be redundantly described.

As shown in FIG. 5, the control device 90 includes an operating unit 89 which includes the control lever 24 and the control panel (not shown); an input section 91 which receives signals from the rotation speed detectors 86, 87 and load detector 88 and converts them to digital signals; a memory unit 92 which stores, for instance, control procedure programs, constants necessary for control, and computation results; a computing unit 93 which performs various computation processes; and an output section 94 which converts signals computed or generated by the computing unit 93 to analog signals and outputs the analog signals to a display device and other devices such as the control valves 81, 82.

The memory unit 92 includes a feeder load - breaker speed memory unit 92a which stores control lines representing the relationship between the drive load on the feeder 16 and the drive speed of the arch breaker 51. FIGS. 6 to 9 show some typical control lines stored in the feeder load-breaker speed memory unit 92a.

The control line shown in FIG. 6 represents decreasing the drive speed of the arch breaker 51 continuously and linearly as the drive load on the feeder 16, the drive load being detected by the load detector 88, increases from 0 (zero). This control line represents stopping the arch breaker 51 when the feeder load reaches its maximum value Pmax. The maximum value Pmax is the maximum value of the pressure in the supply line regulated, for instance, by a relief valve (not shown).

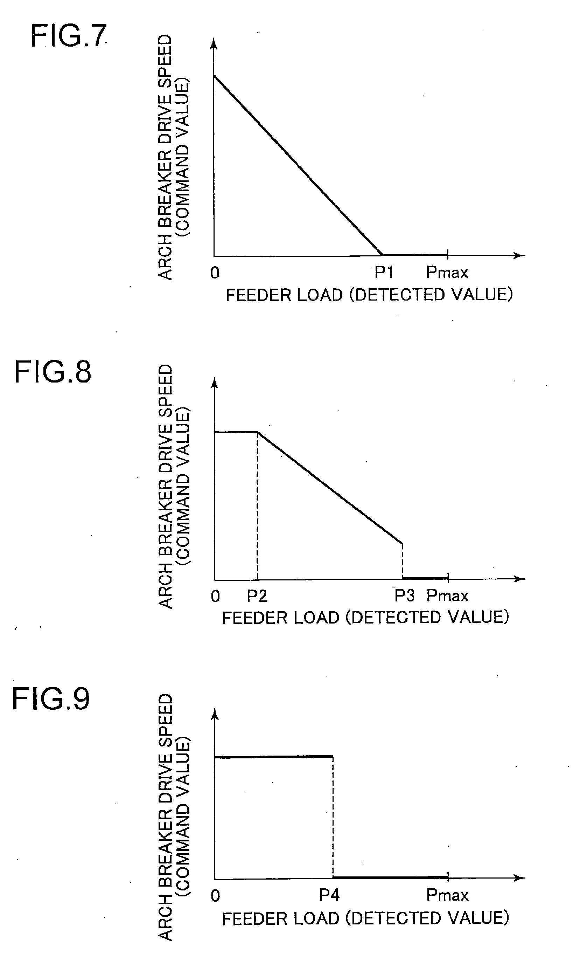

The control line shown in FIG. 7 represents decreasing the drive speed of the arch breaker 51 as the drive load on the feeder 16, the drive load being detected by the load detector 88, increases from 0 (zero), as is the case with FIG. 6. However, this control line represents stopping the arch breaker 51 when the feeder load reaches a threshold value P1 (< Pmax) before it reaches the maximum value Pmax. In this case, the arch breaker 51 decelerates continuously and linearly in accordance with an increase in the drive load on the feeder 16 before it reaches the threshold value P1. However, when it reaches the threshold value P1, the arch breaker 51 comes to a stop. While the drive load on the feeder 16 is greater than the threshold value P1, the arch breaker 51 remains stopped.

The control line shown in FIG. 8 represents decreasing the drive speed of the arch breaker 51 continuously and linearly as the drive load on the feeder 16, the drive load being detected by the load detector 88, increases from a threshold value P2 (> 0) to a threshold value P3 (P2 < P3 < Pmax). According to this control line, the drive speed of the arch breaker 51 is still higher than 0 (zero) when the drive load on the feeder 16 reaches the threshold value P3. However, the arch breaker 51 remains stopped while the drive load on the feeder 16 is greater than the threshold value P3. In other words, when the drive load on the feeder 16 changes from a value smaller than the threshold value P3 to a value greater than the threshold value P3, the speed of the arch breaker 51 changes discontinuously. While the drive load on the feeder 16 changes below the threshold value P2, the arch breaker 51 is driven at a predetermined speed.

The control line shown in FIG. 9 represents driving the arch breaker 51 at a predetermined speed while the drive load on the feeder 16, the drive load being detected by the load detector 88, changes below a threshold value P4 (> 0), and stopping the arch breaker 51 when the drive load on the feeder 16 exceeds the threshold value P4. The drive speed of the arch breaker 51 need not always be linearly controlled. Instead, ON/OFF control may be exercised as described above to drive the arch breaker 51 when the drive load on the feeder 16 is lower than a predetermined value and stop the arch breaker 51 when the drive load on the feeder 16 is higher than the predetermined value. In the above-described example, simple ON/OFF control is exercised while the drive speed of the arch breaker 51 is set to a single value. However, an alternative is to predefine a plurality of threshold values and decrease the drive speed of the arch breaker 51 in stages (in a stepwise fashion) in accordance with an increase in the drive load on the feeder 16.

Although the control lines shown in FIGS. 6 to 9 represents decreasing the drive speed of the arch breaker 51 continuously and linearly, an alternative is to use a control line of the second or higher order or a polynomial control line. Another alternative is to use an empirically defined control line instead of a mathematically defined control line.

The computing unit 93 includes a feeder command section 93a which generates a command value for the feeder 16 in accordance with an operating signal from the operating unit 89; a feeder correction section 93b which corrects the signal of the feeder command section 93a so as to reduce the deviation between a speed command value generated by the feeder command section 93a and the actual feeder drive speed computed from the signal of the speed detector 86; and a breaker command section 93c which generates a drive speed command value for the arch breaker 51 in accordance with a signal from the load detector 88. When the signal of the breaker command section 93c is to be corrected so as to reduce the deviation between the speed command value generated by the breaker command section 93c and the actual arch breaker drive speed computed from the signal of the speed detector 87, the computing unit 93 includes a breaker command section that performs such a function as above, although it is not particularly depicted.

The breaker command section 93c calculates the arch breaker drive speed corresponding to a detected feeder drive load in accordance with information stored in the memory unit 92 (feeder load-breaker speed memory unit 92a), that is, a control line shown, for instance, in FIG. 6, 7, 8, or 9. This enables the speed command value for the arch breaker 51 to be increased with a decrease in the drive load on the feeder 16 and to be decreased with an increase in the drive load on the feeder 16.

As described earlier, in a situation where the feeder load - breaker speed memory unit 92a stores a control line similar to the one shown in FIG. 6, the breaker speed increases with a decrease in the drive load on the feeder 16 and decreases with an increase in the drive load on the feeder 16. Such a breaker speed increase/decrease occurs continuously over the entire drive load range of the feeder 16 (over the range from 0 (zero) to the maximum value Pmax). In a situation where the feeder load - breaker speed memory unit 92a stores a control line for which threshold value P1, P3, or P4 is predefined with respect to the drive load on the feeder 16 as shown in FIGS. 7 to 9, the breaker command section 93c stops the arch breaker 51 by reducing the speed command value for the arch breaker 51 to zero when the feeder drive load computed in accordance with the signal from the load detector 88 reaches the threshold value. Particularly when the stored control line looks like FIG. 9, control is simple because the drive command for the arch breaker 51 is merely turned ON or OFF depending on whether the feeder drive load computed in accordance with the signal from the load detector 88 is smaller than threshold value P4 or not smaller than threshold value P4.

The operation and effect of the soil improvement machine configured as described above will now be described.

Referring to FIG. 1, when the soil to be improved is introduced into the hopper 12 with a hydraulic excavator or the like, the transport conveyor 13 transports the soil received by the hopper 12 toward the mixing device 19. During a soil transport operation, the soil improvement agent supply apparatus 14 adds the soil improvement agent to the soil on the transport conveyor 13 so that the soil is supplied to the mixing device 19 together with the soil improvement agent. In the mixing device 19, a paddle mixer (not shown) uniformly mixes the soil with the soil improvement agent. Improved soil which is obtained as a result of a mixing process in the mixing device 19 is ejected onto the discharge conveyor 26. The discharge conveyor 26 discharges the improved soil out of the machine.

In the above instance, the soil improvement agent is filled into the storage tank 15 through a silo or flexible container. In either case, the soil improvement agent is poured into the storage tank 15 from its top. Thus, the soil improvement agent mixes with air when it falls. Consequently, the bulk density of the soil improvement agent in the storage tank varies with the degree of mixture of the soil improvement agent and air. More specifically, the bulk density decreases with an increase in the amount of air in the mixture. When the bulk density changes due to mixing with air, the cubic volume of the soil improvement agent relative to the drive speed of the feeder 16 changes in effect. However, when the weight of soil improvement agent to be added to the soil is to be calculated from the drive speed of the feeder 16 on the assumption that the bulk density of the soil improvement agent is constant, the error between the calculated and actual amounts of soil improvement agent supply may increase depending on the bulk density, thereby causing an adverse effect on the accuracy of soil improvement agent supply and the consistency of improved soil quality.

In view of the above circumstances, the present embodiment furnishes the storage tank 15 with the arch breaker 51 and stirs the soil improvement agent in the storage tank 15. This will not only inhibit the formation of a bridge that keeps the soil improvement agent from flowing into the feeder 16, but also deaerate the soil improvement agent accumulated in the storage tank 15 to increase the bulk density of the soil improvement agent. Further, control is exercised to decelerate or stop the arch breaker 51 in accordance with an increase in the drive load on the feeder 16 and accelerate the arch breaker 51 in accordance with a decrease in the drive load on the feeder 16. This will not only stabilize the bulk density of the soil improvement agent, but also inhibit the feeder 16 from being overloaded due to an undue deaeration resulting in an excessive increase in the bulk density of the soil improvement agent. Consequently, the present embodiment makes it possible to minimize the influence of changes in the bulk density of the soil improvement agent and enhance the accuracy of addition of soil improvement agent to the soil.

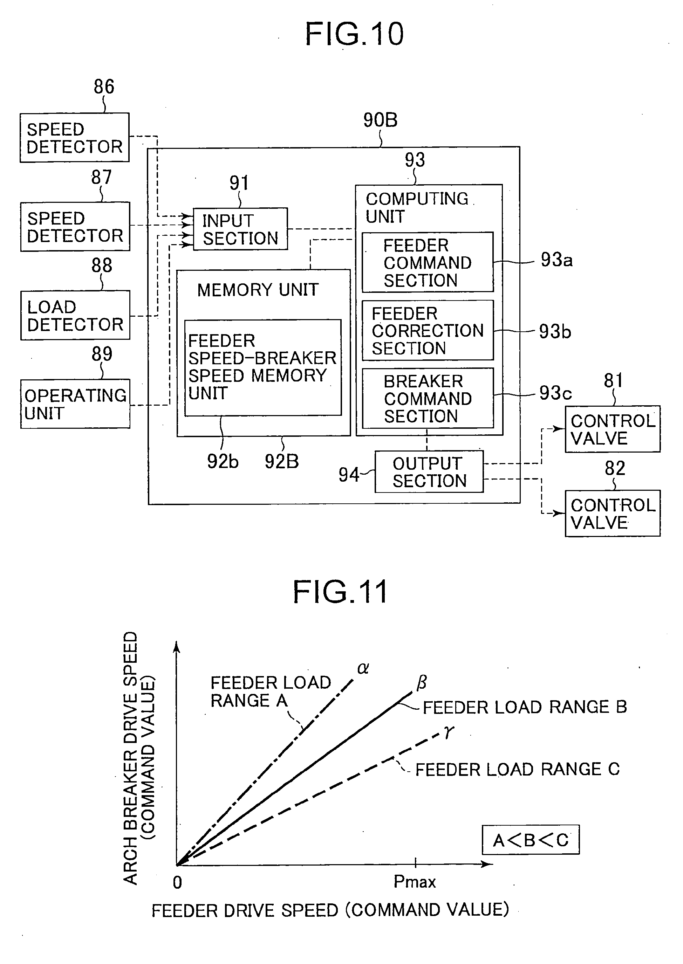

FIG. 10 is a functional block diagram illustrating essential parts of a control device included in a second embodiment of the present invention. FIG. 10 corresponds to FIG. 5, which depicts the first embodiment. Elements that are shown in FIG. 10 and identical with those in the preceding figures are designated by the same reference numerals as the corresponding elements and will not be redundantly described.

The second embodiment differs from the first embodiment in that the former increases/decreases the drive speed of the arch breaker 51 in accordance with the predefined relationship to the drive speed command value for the feeder 16 instead of controlling the drive speed of the arch breaker 51 in accordance with the drive load on the feeder 16.

A memory unit 92B of the control device 90B according to the second embodiment includes a feeder speed-breaker speed memory unit 92b, which stores the drive speed command value relationship between the feeder 16 and arch breaker 51. In the present embodiment, the feeder speed-breaker speed memory unit 92b stores the drive speed relationship between the feeder 16 and arch breaker 51, which is defined for each of a plurality of drive load ranges of the feeder 16 (a plurality of command value relationships between feeder speed and breaker speed are predefined).

FIG. 11 shows control curves that represent the drive speed relationships between the feeder 16 and arch breaker 51, which are stored in the feeder speed-breaker speed memory unit 92b.

According to the control curves α, β, γ shown in FIG. 11, the speed command value for the arch breaker 51 is determined in accordance with the speed command value for the feeder 16 and without regard to the actual load and speed of the feeder 16. The control curves α, β, γ shown in FIG. 11 exemplify cases where the drive speed of the arch breaker 51 increases linearly and continuously in accordance with an increase in the drive speed command value for the feeder 16. However, the drive speed of the arch breaker 51 need not always increase linearly or continuously. When, for instance, the drive speed command value for the feeder 16 is close to 0 (zero), the command value for the arch breaker 51 may alternatively be set to 0 (zero) within a range below a certain threshold value. Another alternative is to use a control curve that varies the command value for the arch breaker 51 in stages or in a curve. Still another alternative is to use such a control curve that the command value for the arch breaker 51 is either 0 (zero) or a certain value (ON/OFF control).

Further, when the feeder drive load calculated in accordance with a signal from the load detector 88 increases, the present embodiment switches to a control curve that decreases the command value for the arch breaker 51 even if the command value for the feeder 16 remains unchanged. When, for instance, the drive load on the feeder 16 increases beyond load range B and reaches load range C in a situation where load ranges A, B, and C (A < B < C) are defined for the drive load on the feeder 16 to generally generate a command value for the arch breaker 51 through the use of control curve β, the present embodiment proceeds to control the arch breaker 51 by using control curve γ. When the drive load on the feeder 16 decreases below load range C and reverts to load range B while control curve γ is used to control the arch breaker 51, the present embodiment switches back to control curve β from control curve γ. On the contrary, when the drive load on the feeder 16 decreases below load range B while control curve β is used for control purposes, the present embodiment proceeds to control the arch breaker 51 by using control curve α. When the drive load on the feeder 16 exceeds load range A and reverts to load range B while control curve α is used to control the arch breaker 51, the present embodiment switches back to control curve β from control curve α.

It means, in the present embodiment, that, in accordance with a signal from the operating unit 89 and the information (control curve) stored in the memory unit 92B (feeder speed-breaker speed memory unit 92b), the breaker command section 93c increases the speed command value for the arch breaker 51 when the speed command value for the feeder 16 increases, and decreases the speed command value for the arch breaker 51 when the speed command value for the feeder 16 decreases. The breaker command section 93c also references the relationship associated with a signal from the load detector 88 (control curve α, β, or γ) and generates a speed command value for the arch breaker 51.

The configuration and operation of elements other than the above are the same as those described in connection with the first embodiment and will not be redundantly described.

To increase the drive speed command value for the feeder 16 is to accordingly increase the speed of soil improvement agent addition to the soil. Therefore, the soil improvement agent supply amount demanded by the feeder 16 decreases. Further, it is necessary to inhibit the bulk density of the soil improvement agent from decreasing due to an increase in the amount of soil improvement agent discharge from the feeder 16. On the contrary, to decrease the drive speed command value for the feeder 15 is to accordingly decrease the speed of soil improvement agent addition to the soil. Therefore, the soil improvement agent supply amount demanded by the feeder 16 decreases, thereby making it necessary to inhibit an increase in the bulk density of the soil improvement agent, which may result from vigorous transport by the arch breaker 51. Consequently, the present embodiment can minimize the influence of changes in the bulk density of the soil improvement agent and enhance the accuracy of soil improvement agent addition to the soil by increasing or decreasing the speed command value for the arch breaker 51 in accordance with an increase/decrease in the speed command value for the feeder 16. This effect can be efficiently produced by merely setting the drive speed command values for the feeder 16 and arch breaker 51 in concord with each other. However, the effect can be further enhanced when control is additionally exercised to change the employed control curve in accordance with an increase/decrease in the drive load on the feeder 16.

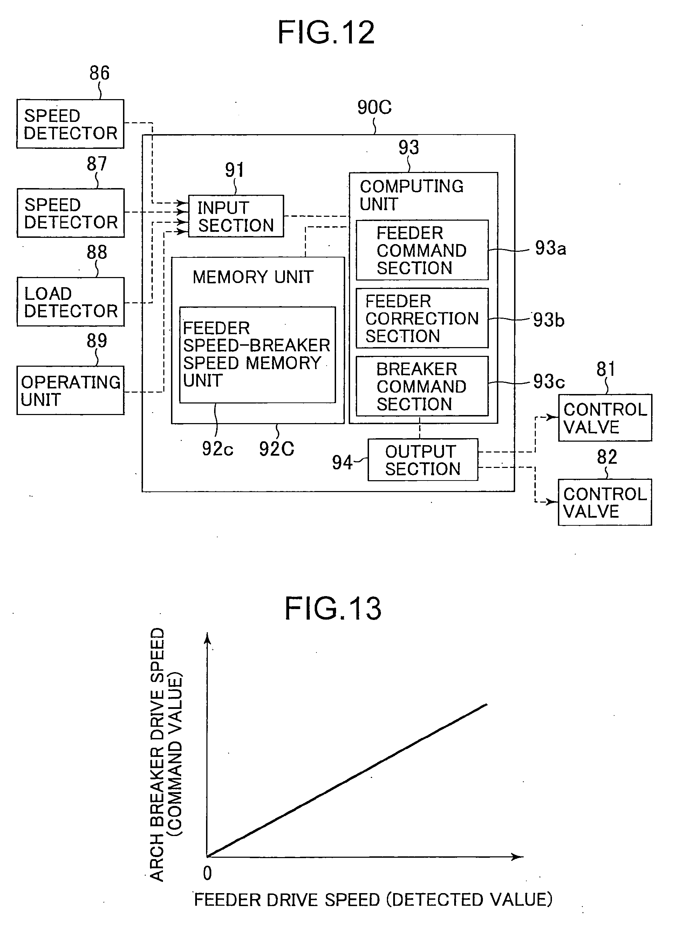

FIG. 12 is a functional block diagram illustrating essential parts of a control device included in a third embodiment of the present invention. FIG. 12 corresponds to FIG. 5, which depicts the first embodiment. Elements that are shown in FIG. 12 and identical with those in the preceding figures are designated by the same reference numerals as the corresponding elements and will not be redundantly described.

The third embodiment differs from the first embodiment in that the former controls the drive speed of the arch breaker 51 in accordance with a detected drive speed of the feeder 16 instead of the drive load on the feeder 16.

The control device 90C according to the present embodiment has a memory unit 92C, which includes a feeder speed-breaker speed memory unit 92c for storing the drive speed relationship between the feeder 16 and arch breaker 51.

FIG. 13 shows a control curve that represents the drive speed relationship between the feeder 16 and arch breaker 51, which is stored in the feeder speed-breaker speed memory unit 92c.

According to the control curve shown in FIG. 13, the speed command value for the arch breaker 51 is determined in accordance with an actual drive speed (detected value) of the feeder 16. The control curve shown in FIG. 13 exemplifies a case where the drive speed command value for the arch breaker 51 increases linearly and continuously in accordance with an increase in the drive speed of the feeder 16, which is detected by the speed detector 86. However, the drive speed command value for the arch breaker 51 need not always increase linearly or continuously. When, for instance, the drive speed of the feeder 16 is close to 0 (zero), the command value for the arch breaker 51 may alternatively be set to 0 (zero) within a range below a certain threshold value. Another alternative is to use a control curve that varies the command value for the arch breaker 51 in stages or in a curve. Still another alternative is to use such a control curve that the command value for the arch breaker 51 is either 0 (zero) or a certain value (ON/OFF control).

It means, in the present embodiment, that, in accordance with a signal from the speed detector 86 and the information (control curve) stored in the memory unit 92C (feeder speed-breaker speed memory unit 92c), the breaker command section 93c increases the speed command value for the arch breaker 51 when the detected drive speed of the feeder 16 increases, and decreases the speed command value for the arch breaker 51 when the detected drive speed of the feeder 16 decreases.

The configuration and operation of elements other than the above are the same as those described in connection with the first embodiment and will not be redundantly described.

The load on the feeder 16 more or less correlates with its drive speed. In other words, if the drive speed of the feeder 16 decreases while the speed command for the feeder 16 remains unchanged, it is estimated that the drive load on the feeder 16 will increase. If, on the contrary, the drive speed of the feeder 16 increases while the speed command for the feeder 16 remains unchanged, it is estimated that the drive load on the feeder 16 will decrease. Therefore, the third embodiment produces the same effect as the first embodiment by decreasing the drive command value for the arch breaker 51, as is the case with the first embodiment, when it is estimated that the drive load on the feeder 16 will increase due to a decrease in the drive speed of the feeder 16, and by increasing the drive command value for the arch breaker 51 when it is estimated that the drive load on the feeder 16 will decrease due to an increase in the drive speed of the feeder 16.

In the foregoing embodiments, the soil improvement agent supply apparatus employs a single-axis screw feeder 16. However, the present invention can also be applied to a case where the soil improvement agent supply apparatus has a plurality of screws 62. Further, although the screw 62 is of a single-thread type, the present invention is also applicable to a multi-thread screw. Furthermore, it has been assumed that the soil improvement machine having the soil improvement agent supply apparatus according to the present invention is a self-propelled soil improvement machine having a hopper 12 into which soil is directly introduced. However, an alternative is to use a self-propelled soil improvement machine having an oscillating (or stationary) screen that is positioned over the hopper to remove foreign matter from soil. Another alternative is to use a self-propelled soil improvement machine that has a so-called gate above the aforementioned screen. Moreover, it has been assumed that the self-propelled soil improvement machine includes crawler type travel devices having a crawler 7. However, the present invention can also be applied to a self-propelled soil improvement machine having a so-called wheel type travel device. In addition, the present invention is also applicable to a soil improvement agent supply apparatus for use with a stationary soil improvement machine, which does not have a self-propelling capability. The above-described alternative schemes will produce the same effect as the foregoing embodiments.

While the present invention has been described on the assumption that the soil improvement agent supply apparatus is mounted on the main body frames 3 of the self-propelled soil improvement machine, the present invention can also be applied to a soil improvement agent supply apparatus that is positioned separately from the self-propelled soil improvement machine. The present invention is also applicable to a soil improvement agent supply apparatus that is detachable from the main body frames 3. Further, the present invention is also applicable, for instance, to a stationary silo or self-propelled silo (refer, for instance, to JP-A-2003-321850). Furthermore, the present invention has been described in connection with a soil improvement agent supply apparatus that uses a screw feeder as the feeder 16. However, the present invention can also be applied to a soil improvement agent supply apparatus that uses, for instance, a rotary feeder (a rotary valve), a belt conveyor, or a table feeder as the feeder 16. Moreover, the present invention has been described with reference to cases where the arch breaker 51, which is configured as shown in FIG. 3, is used as the stirring device that stirs the soil improvement agent in the storage tank. However, the present invention is also applicable to cases where any other stirring device capable of stirring the soil improvement agent in the storage tank is employed. The above-described alternative schemes will also produce the same effect as the foregoing embodiments.

## Claims

1. A soil improvement agent supply apparatus for adding a soil improvement agent to soil, the apparatus comprising:
a storage tank (15) for storing the soil improvement agent;
a feeder (16) placed beneath the storage tank (15) to add the soil improvement agent in the storage tank (15) to the soil;
a stirring device (51) placed in the storage tank (15) to stir the soil improvement agent in the storage tank (15) ;
a load detector (88) for detecting the drive load on the feeder (16); and
a control device (90) for controlling the feeder (16) and the stirring device (51);
wherein the control device includes
an input section (91) for inputting a signal from the load detector (88),
a memory unit (92) for storing the relationship between the drive load on the feeder (16) and the drive speed of the stirring device (51),
a command section (93c) which, in accordance with a signal from the load detector (88) and information stored in the memory unit (92), increases a speed command value for the stirring device (51) when the drive load on the feeder (16) decreases and decreases the speed command value for the stirring device (51) when the drive load on the feeder (16) increases, and
an output section (94) for outputting a command value generated in the command section to the stirring device (51).

2. A soil improvement agent supply apparatus for adding a soil improvement agent to soil, the apparatus comprising:
a storage tank (15) for storing the soil improvement agent;
a feeder (16) placed beneath the storage tank (15) to add the soil improvement agent in the storage tank (15) to the soil;
a stirring device (51) placed in the storage tank (15) to stir the soil improvement agent in the storage tank (15);
a control device (90) for controlling the feeder (16) and the stirring device (51); and
an operating unit for manipulating the drive speed of the feeder (16);
wherein the control device (90) includes
a memory unit for storing the relationship between drive speed command values for the feeder (16) and the stirring device (51),
a command section (93c) which, in accordance with a signal from the operating unit and information stored in the memory unit (92), increases the speed command value for the stirring device (51) when the speed command value for the feeder (16) increases and decreases the speed command value for the stirring device (51) when the speed command value for the feeder (16) decreases, and
an output section (94) for outputting the command values generated in the command section to the feeder (16) and the stirring device (51).

3. The soil improvement agent supply apparatus according to claim 2, further comprising:
a load detector (88) for detecting the drive load on the feeder (16);
wherein the memory unit (92) stores the relationship between the drive speed of the feeder (16) and the drive speed of the stirring device (51) with respect to each of a plurality of drive load ranges of the feeder (16); and
wherein the command section (93) references the relationship in accordance with a signal from the load detector (88) and generates a speed command value for the stirring device (51).

4. The soil improvement agent supply apparatus according to claim 1 or 3, wherein the memory unit (92) stores a preselected threshold value for the drive load on the feeder (16); and wherein the command section (93) reduces the speed command value for the stirring device (51) to zero when the drive load on the feeder (16) reaches the threshold value, the drive load being computed in accordance with a signal from the load detector (88).

5. A soil improvement agent supply apparatus for adding a soil improvement agent to soil, the apparatus comprising:
a storage tank (15) for storing the soil improvement agent;
a feeder (16) placed beneath the storage tank (15) to add the soil improvement agent in the storage tank (15) to the soil;
a stirring device (51) placed in the storage tank (15) to stir the soil improvement agent in the storage tank (15);
a speed detector (86) for detecting the drive speed of the feeder (16); and
a control device for controlling the feeder (16) and the stirring device (51);
wherein the control device (90) includes
an input section (91) for inputting a signal from the speed detector (86),
a memory unit (92) for storing the relationship between the drive speed of the feeder (16) and the drive speed of the stirring device (51),
a command section (93) which, in accordance with a signal from the speed detector (86) and information stored in the memory unit (92), increases a speed command value for the stirring device (51) when the drive speed of the feeder (16) increases and decreases the speed command value for the stirring device (51) when the drive speed of the feeder (16) decreases, and
an output section (94) for outputting a command value generated in the command section to the stirring device (51).

6. A soil improvement agent supply apparatus for adding a soil improvement agent to soil, the apparatus comprising:
a storage tank (15) for storing the soil improvement agent;
a feeder (16) placed beneath the storage tank (15) to add the soil improvement agent in the storage tank (15) to the soil;
a stirring device (51) placed in the storage tank (15) to stir the soil improvement agent in the storage tank (15);
a load detector (88) for detecting the drive load on the feeder (16); and
a control device (90) for controlling the feeder (16) and the stirring device (51);
wherein the control device (90) includes
an input section (91) for inputting a signal from the load detector (88),
a memory unit (92) for storing a preselected threshold value for the drive load on the feeder (16),
a command section (93) which generates a predefined speed command value for the stirring device (51) when the feeder drive load computed in accordance with a signal from the load detector (88) is lower than the threshold value and reduces the speed command value for the stirring device (51) to zero when the feeder drive load is not lower than the threshold value, and
an output section (94) for outputting a command value generated in the command section (93) to the stirring device (51).

7. The soil improvement agent supply apparatus according to any one of claims 1 to 6, wherein the feeder (16) is a screw feeder including a tubular casing connected to the bottom of the storage tank (15), a rotating shaft (66) placed in the casing (61), and a screw (62) mounted on the outer circumference of the rotating shaft (66).
